# EUROPEAN PATENT SPECIFICATION

(11) **EP 4 523 975 B1**
(45) Date of publication and mention of the grant of the patent: **01.10.2025**
(21) Application number: 24198144.8
(22) Date of filing: 03.09.2024
(51) Int. Cl.: B60R 16/023, B60R 16/03, H02J 1/08, H02J 7/00, H02J 7/34

(54) **ELECTRONIC COMPONENT UNIT AND WIRE HARNESS**
ELEKTRONISCHE KOMPONENTENEINHEIT UND KABELBAUM
UNITÉ DE COMPOSANT ÉLECTRONIQUE ET FAISCEAU DE CÂBLES

(30) Priority: 13.09.2023 JP 2023148045
(43) Date of publication of application: 19.03.2025
(73) Proprietor: Yazaki Corporation, Tokyo 108-0075 (JP)
(72) Inventor: Kikuchi, Hideaki, Susono-shi, Shizuoka, 410-1194 (JP); Ogura, Hiroyuki, Susono-shi, Shizuoka, 410-1194 (JP)
(74) Representative: Grünecker Patent- und Rechtsanwälte PartG mbB

(56) References cited:
- US-A1- 2009 108 982
- US-A1- 2014 017 529
- US-A1- 2016 347 184
- US-A1- 2019 389 408
- US-A1- 2020 169 114
- US-B2- 7 176 780

## Description

### BACKGROUND OF THE INVENTION

### 1. Field of the Invention

The present invention relates to an electronic component unit and a wire harness.

### 2. Description of the Related Art

For example, Japanese Patent Application Laid-open No. 2016-222085 A discloses a wire harness for supplying power to various devices installed in a vehicle. The wire harness includes a power supply wire connected to a single vehicle battery that outputs a predetermined first battery voltage, a power supply control box that receives the first battery voltage via the power supply wire, supplies the received first battery voltage to a first device operating at the first battery voltage, steps down the received first battery voltage to set a second battery voltage lower than the first battery voltage, and supplies the second battery voltage to a second device operating at the second battery voltage, a first supply wire that is provided between the power supply control box and the first device to supply the first battery voltage to the first device, and a second supply wire that is provided between the power supply control box and the second device to supply the second battery voltage to the second device.

Meanwhile, the wire harness achieves power supply to each device under a situation where devices with different operating voltages coexist by integrating, into the power supply control box, a voltage conversion function in addition to fuses, relays, branches, and the like. However, the wire harness has room for further improvement in terms of arrangement of the voltage conversion function and so on, for example.

### SUMMARY OF THE INVENTION

The present invention has been made in view of the above circumstances, and an object of the present invention is to provide an electronic component unit and a wire harness capable of appropriately supplying power to various devices mounted on a vehicle.

In order to achieve the above mentioned object, an electronic component unit according to one aspect of the present invention includes a power supply terminal that is connected to a power supply mounted on a vehicle and capable of supplying power at a first voltage; a circuit branch portion that is connected to the power supply terminal to branch power supplied from the power supply into a plurality of power supply systems; and a voltage converter that is detachably provided from at least one of the plurality of power supply systems in the circuit branch portion, and converts a voltage of the power supplied from the power supply into a second voltage lower than the first voltage to output the second voltage.

In order to achieve the above mentioned object, a wire harness according to another aspect of the present invention includes an electronic component unit that is provided in a power supply mounted on a vehicle and capable of supplying power at a first voltage; and a power supply wire that supplies power from the electronic component unit to a device mounted on the vehicle, wherein the electronic component unit includes a power supply terminal that is connected to the power supply, a circuit branch portion that is connected to the power supply terminal to branch power supplied from the power supply into a plurality of power supply systems, and a voltage converter that is detachably provided from at least one of the plurality of power supply systems in the circuit branch portion, and converts a voltage of the power supplied from the power supply into a second voltage lower than the first voltage to output the second voltage.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic block diagram illustrating a schematic configuration of a power supply system to which a wire harness according to an embodiment is applied;
FIG. 2 is a schematic block diagram illustrating a schematic configuration of a vehicle to which a wire harness according to an embodiment is applied;
FIG. 3 is a perspective view illustrating a schematic configuration of a battery to which an electronic component unit according to an embodiment is assembled;
FIG. 4 is an exploded perspective view illustrating a schematic configuration of an electronic component unit according to an embodiment;
FIG. 5 is a perspective view illustrating a schematic configuration of an electronic component unit according to an embodiment;
FIG. 6 is a schematic circuit diagram illustrating a schematic configuration of an electronic component unit according to an embodiment;
FIG. 7 is a schematic perspective view illustrating a schematic configuration of a voltage converter of an electronic component unit according to an embodiment;
FIG. 8 is a perspective view illustrating a schematic configuration of another aspect of an electronic component unit according to an embodiment; and
FIG. 9 is a schematic circuit diagram illustrating a schematic configuration of another aspect of an electronic component unit according to an embodiment.

### DETAILED DESCRIPTION OF THE PREFERRED EMBODIMENTS

Hereinafter, an embodiment according to the present invention will be described in detail with reference to the drawings. Note that the present invention is not limited to the embodiment. In addition, constituent elements in the following embodiment include those that can be easily replaced by those skilled in the art or those that are substantially the same.

### Embodiment

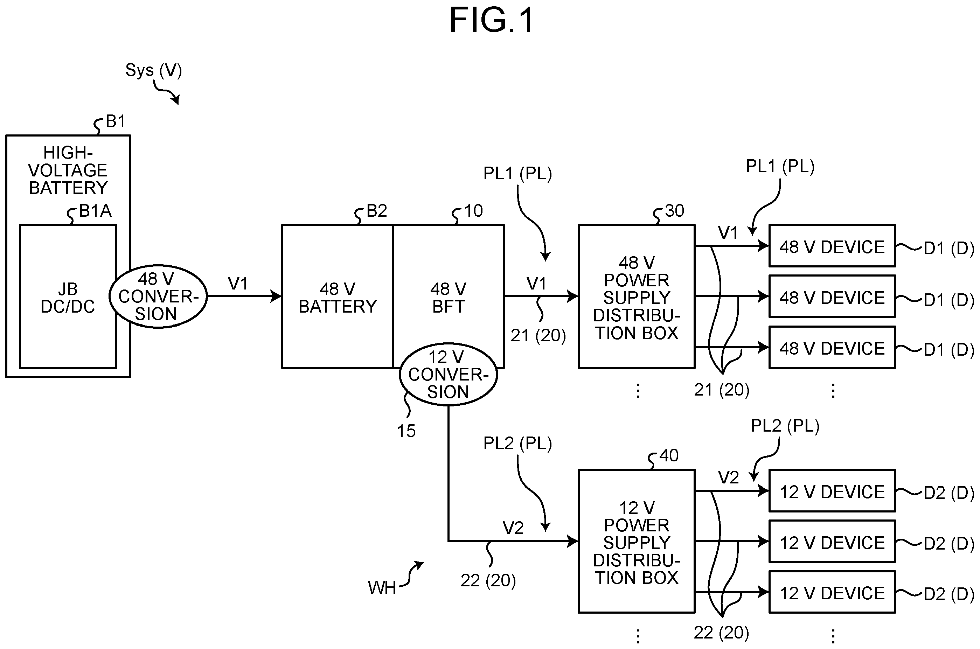

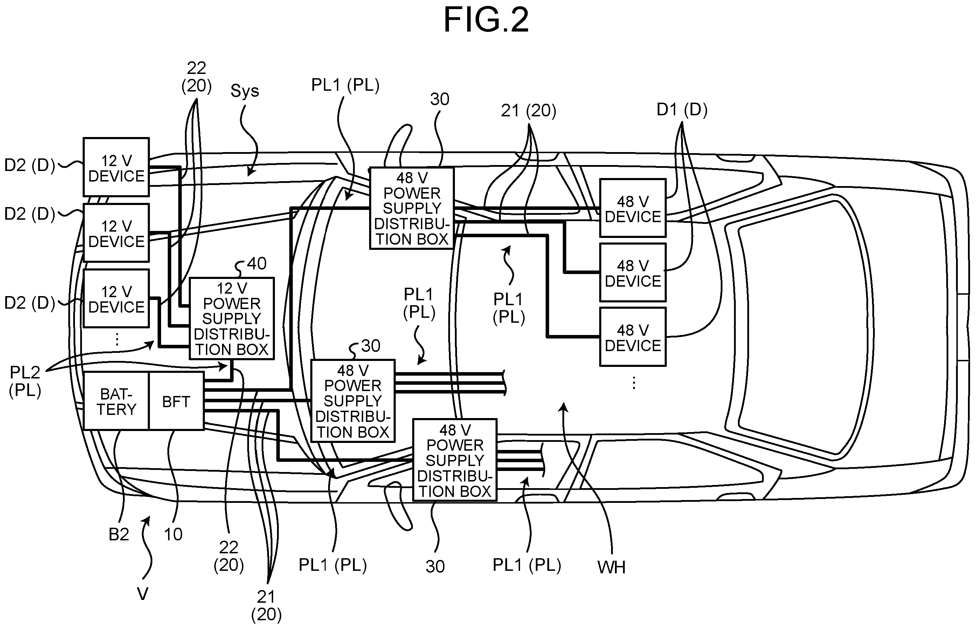

A wire harness WH according to the present embodiment illustrated in FIGS. 1 and 2 is applied to a power supply system Sys mounted on a vehicle V. The power supply system Sys is a system that supplies power to various devices D mounted on the vehicle V. The devices D are load devices that operate and are driven by power supplied from the power supply system Sys to exhibit various functions in the vehicle V. Examples of the device D include a traveling system actuator (motor generator, steering device, braking device, etc.), a body system device (lighting device, air conditioning device, wiper device, electric mirror, electric seat, electric door, etc.), a multimedia system device (navigation device, audio, meter, display, etc.), a detection system device (sensor, camera, radar, etc.), a communication device, and an electronic control unit (electronic control unit, that is, ECU).

In recent years, with the diversification of power supplies in the vehicle V, there is an increasing need to dispose and mount devices D with different drive voltages together in the vehicle V. Under such a circumstance, the power supply system Sys is required to appropriately supply power to a plurality of devices D with different drive voltages.

As described above, the wire harness WH of the present embodiment achieves, in a situation where the devices D with different drive voltages coexist, a configuration in which power can be appropriately supplied to the various devices D mounted on the vehicle V. Hereinafter, each configuration of the wire harness WH and the like will be described in detail with reference to each drawing.

In the following description, it is assumed that the device D is a plurality of devices D with different drive voltages and includes a first device D1 driven at a first voltage V1 and a second device D2 driven at a second voltage V2. The first voltage V1 is, for example, a voltage of 30 V or more and 60 V or less. On the other hand, the second voltage V2 is lower than the first voltage V1, and is for example, higher than 0 V and lower than 30 V. Here, as an example, description will be given on the assumption that the first voltage V1 is "48 V" and the second voltage V2 is "12 V". That is, herein, description will be given on the assumption that the first device D1 is a 48 V drive device driven at a voltage of 48 V, and the second device D2 is a 12 V drive device driven at a voltage of 12 V. In the following description, in a case where it is not necessary to particularly distinguish between the first device D1 and the second device D2, they are sometimes simply referred to as the "device D".

Specifically, as illustrated in FIGS. 1 and 2, the power supply system Sys includes a high-voltage battery B1 and a 48 V battery B2 serving as power supplies, and a wire harness WH that electrically connects these batteries to the devices D. In FIG. 2, illustration of the high-voltage battery B1 is omitted for easy understanding of the drawing.

The high-voltage battery B1 is a battery that stores power at a predetermined high voltage, and is a first power supply capable of supplying power at the predetermined high voltage. The high-voltage battery B1 typically has a voltage higher than that of the 48 V battery B2 and has, for example, a voltage (battery voltage) of about 300 V to 400 V. The high-voltage battery B1 of the present embodiment is electrically connected to the 48 V battery B2 via a DC/DC converter B1A, and supplies power to the 48 V battery B2. The DC/DC converter B1A is a transformer that converts a voltage of DC power. The DC/DC converter B1A is electrically connected to the 48 V battery B2, converts a voltage of power from the high-voltage battery B1 into the first voltage V1, and outputs the first voltage V1 to the 48 V battery B2. Here, the first voltage V1 is "48 V". That is, the DC/DC converter B1A steps down the voltage of the high-voltage battery B1 to a voltage of 48 V corresponding to the first voltage V1, and outputs the resultant to the 48 V battery B2. The high-voltage battery B1 is electrically connected also to a device (not illustrated), and supplies power to the device (not illustrated).

The 48 V battery B2 is a battery that stores power at the first voltage V1 lower than the voltage of the high-voltage battery B1, and is a second power supply capable of supplying power at the first voltage V1. As described above, herein, the first voltage V1 is "48 V". That is, the 48 V battery B2 is a voltage (battery voltage) of about 48 V. The 48 V battery B2 is electrically connected to the high-voltage battery B1 via the DC/DC converter B1A, and can be charged with power supplied from the high-voltage battery B1 via the DC/DC converter B1A. The 48 V battery B2 is not limited to the high-voltage battery B1, and may be charged with power generated by, for example, a 48 V generator (48 V alternator) (not illustrated) or the like. The 48 V battery B2 is electrically connected to each device D via the wire harness WH, and supplies power to each device D via the wire harness WH. The 48 V battery B2 of the present embodiment serves as a power supply that supplies power to both the first device D1 and the second device D2 via the wire harness WH.

The wire harness WH constitutes a power supply system PL that supplies power from the 48 V battery B2, which is the power supply, to each device D. The wire harness WH of the present embodiment has a voltage conversion function of converting the voltage of the power supplied from the 48 V battery B2 into the second voltage V2, which is lower than the first voltage V1, to output the second voltage V2. Thereby, power is appropriately supplied to the first device D1 and the second device D2 with different drive voltages from each other.

Specifically, the wire harness WH of the present embodiment includes an electronic component unit 10, a power supply wire 20, a 48 V power supply distribution BOX 30, and a 12 V power supply distribution BOX 40. The electronic component unit 10 is equipped with the voltage conversion function.

The electronic component unit 10 is a unit directly connected to the 48 V battery B2 that is a power supply, and may be referred to as a battery fuse terminal (BFT). The electronic component unit 10 of the present embodiment further has the voltage conversion function for outputting 12 V in addition to a circuit branch function and a circuit protection function. The configuration enables the electronic component unit 10 to distribute power to the second device D2 that is the 12 V drive device in addition to distributing power to the first device D1 that is the 48 V drive device.

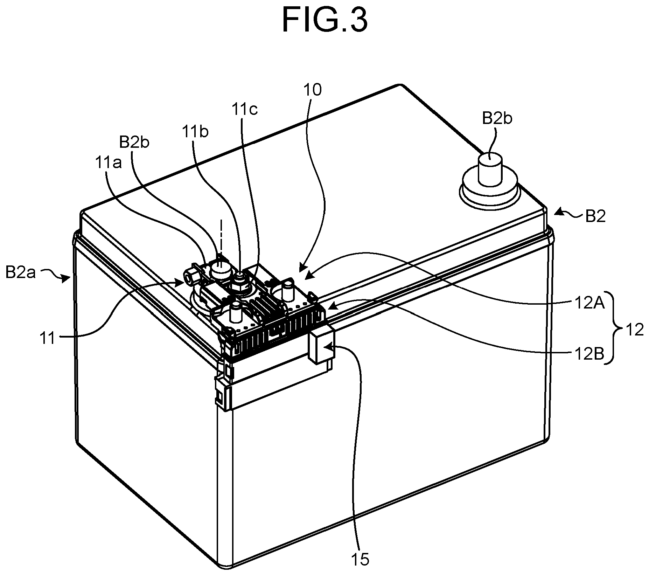

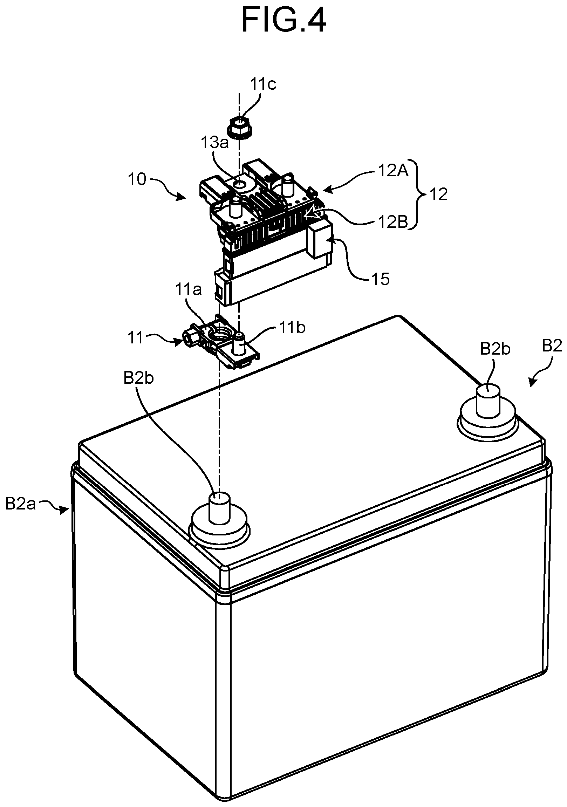

Here, as illustrated in FIGS. 3 and 4, the 48 V battery B2 provided with the electronic component unit 10 includes a battery housing B2a and a battery post B2b. The battery housing B2a is formed in a substantially rectangular parallelepiped shape as a whole, and houses battery liquid and various components therein. The battery post B2b is provided to protrude from the upper surface of the battery housing B2a. The battery post B2b is made of conductive lead or the like to have a substantially cylindrical shape. A pair of battery posts B2b is provided on the upper surface of the battery housing B2a at intervals, and one of the battery posts B2b constitutes an anode and the other constitutes a cathode. The electronic component unit 10 of the present embodiment is assembled to the battery post B2b on the anode side.

Specifically, as illustrated in FIGS. 3, 4, 5, and 6, the electronic component unit 10 includes a battery terminal 11 functioning as a power supply terminal and a unit body 12, and is electrically connected to the battery post B2b on the anode side via the battery terminal 11.

The battery terminal 11 is a connection terminal made of a conductive metal material. The battery terminal 11 is interposed between the battery post B2b and the unit body 12 to electrically connect them to each other. The battery terminal 11 includes a fastening portion 11a, a stud bolt 11b, and a nut 11c. In the battery terminal 11, the fastening portion 11a is fastened to the battery post B2b, and the unit body 12 is fastened to the stud bolt 11b via the nut 11c. As a result, the battery terminal 11 is electrically connected to the 48 V battery B2 and the unit body 12 to electrically connect them to each other.

The unit body 12 includes a base portion 12A and a hanging portion 12B. The base portion 12A and the hanging portion 12B intersect with each other via a bent portion, so that the unit body 12 is formed in a substantially L-shape as a whole. The base portion 12A is located on the upper surface of the battery housing B2a on which the battery post B2b is provided, and is located along that upper surface. The hanging portion 12B is provided to protrude so as to hang down along the side surface of the battery housing B2a from the base portion 12A via the bent portion.

The unit body 12 of the present embodiment includes a circuit branch portion 13 that implements the circuit branch function, a circuit protector 14 that implements the circuit protection function, and a voltage converter 15 that implements the voltage conversion function for outputting 12 V.

The circuit branch portion 13 is connected to the battery terminal 11 and is operable to branch the power supplied from the 48 V battery B2 into a plurality of power supply systems PL. Here, the plurality of power supply systems PL branched by the circuit branch portion 13 includes a plurality of 48 V power supply systems PL1 and at least one 12 V power supply system PL2. Each of the 48 V power supply systems PL1 is a power supply system PL that supplies a voltage of 48 V corresponding to the first voltage V1 to the first device D1 that is the 48 V drive device. On the other hand, the 12 V power supply system PL2 is a power supply system PL that supplies a voltage of 12 V corresponding to the second voltage V2 to the second device D2 that is the 12 V drive device. The circuit branch portion 13 branches the power supplied from the 48 V battery B2 into the plurality of 48 V power supply systems PL1 and at least one 12 V power supply system PL2.

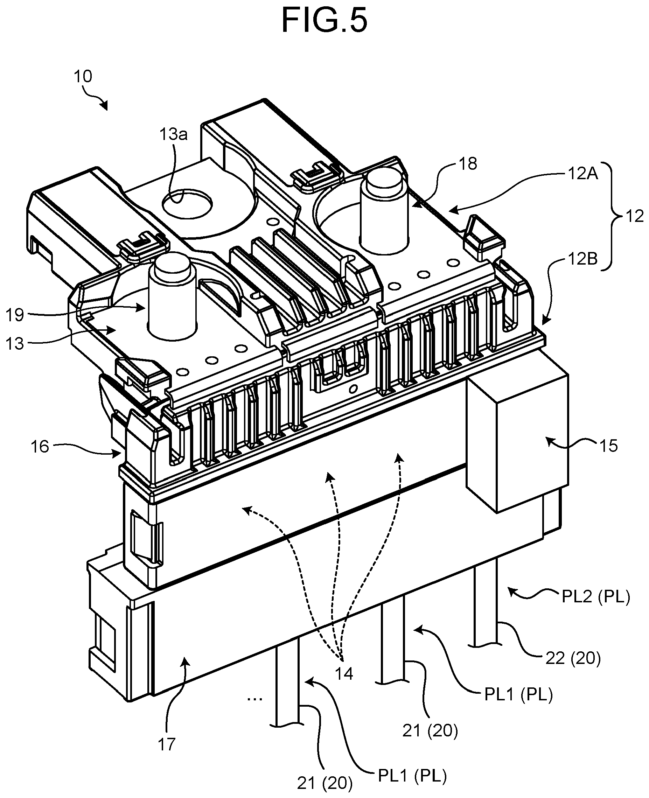

The circuit branch portion 13 is configured with, for example, a metal bus bar. The metal bus bar is a platelike conductor made of a conductive metal material. The circuit branch portion 13 is configured, with a metal bus bar, as a bus bar circuit having a branch portion. The circuit branch portion 13 is embedded and protected in a resin housing 16 (see FIG. 5) by, for example, insert molding or the like. The circuit branch portion 13 is formed by being bent across the base portion 12A and the hanging portion 12B via the bent portion.

In a state where the circ uit branch portion 13 is embedded in the housing 16, a part of the circuit branch portion 13 located in the base portion 12A is partially exposed and a fastening hole 13a is formed in the exposed part. The stud bolt 11b described above is inserted through the fastening hole 13a to be screwed into the nut 11c, so that the circuit branch portion 13 is fastened to the battery terminal 11, electrically connected to the battery terminal 11, and electrical contact can be made.

As a result, the circuit branch portion 13 is conducted to the 48 V battery B2 via the battery terminal 11, and power is supplied and input from the 48 V battery B2 at the first voltage V1, that is, at a voltage of 48 V.

The circuit branch portion 13 constitutes a circuit branched according to the number of power supply systems PL, and branches the power supplied from the 48 V battery B2 into the plurality of power supply systems PL. In the circuit branch portion 13, in an output terminal portion 17 (see FIG. 5) located at an end of the hanging portion 12B of the unit body 12, an end of the branched circuit is electrically connected to each power supply wire 20 that constitutes each power supply system PL via a connector or the like, and the branched power is output to each of the power supply wires 20.

For example, stud bolts 18 and 19 and so on are also articulated with the circuit branch portion 13, and the circuit branch portion 13 is embedded and integrated in the housing 16 together with the stud bolts 18 and 19. In the stud bolts 18 and 19, for example, a connection terminal and the like are fastened together with the circuit branch portion 13, and the 48 V generator (48 V alternator) described above, other devices, and the like are electrically connected via the connection terminal and the like.

The circuit protector 14 is provided in the power supply system PL in the circuit branch portion 13. When overcurrent flows through the power supply system PL, the circuit protector 14 cuts off the overcurrent to protect the power supply system PL. Here, the circuit protector 14 is provided for each of the plurality of power supply systems PL in the circuit branch portion 13. Typically, the circuit protector 14 is configured with a fuse element such as a fuse or a fusible link that is fused to cut off a current path when overcurrent flows. The circuit protector 14 is incorporated in a circuit constituting each power supply system PL in the circuit branch portion 13. The overcurrent herein is, for example, current equal to or higher than a preset rating. That is, the fuse element is fused when current equal to or higher than the preset rating flows. The rated current is determined according to the current of the circuit to be protected. Typically, the fuse elements constituting the circuit protector 14 have different capacities in the 48 V power supply system PL1 and the 12 V power supply system PL2. Note that the circuit protector 14 is not limited to the fuse element, and for example, a protective circuit breaker including a semiconductor relay or the like may be applied.

The voltage converter 15 is provided in at least one of the plurality of power supply systems PL in the circuit branch portion 13. The voltage converter 15 converts a voltage of the power supplied from the 48 V battery B2 into the second voltage V2 lower than the first voltage V1 to output the second voltage V2. As a result, the electronic component unit 10 of the present embodiment can also output at the second voltage V2 lower than the first voltage V1 in addition to the output at the first voltage V1 corresponding to the battery voltage of the 48 V battery B2. The voltage converter 15 is provided in the 12 V power supply system PL2 of the plurality of power supply systems PL in the circuit branch portion 13. The voltage converter 15 performs step-down voltage conversion on a voltage of 48 V corresponding to the first voltage V1 into a voltage of 12 V corresponding to the second voltage V2 to output the voltage of 12 V to the 12 V power supply system PL2.

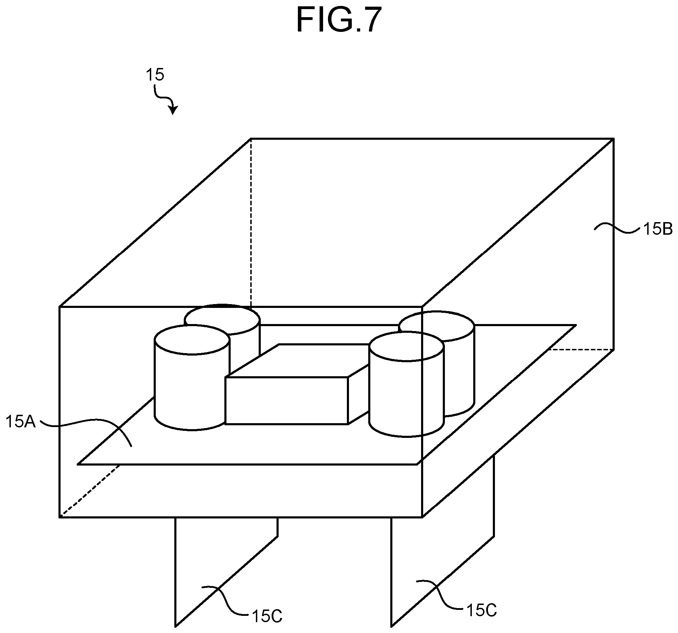

The voltage converter 15 is typically configured with a DC/DC converter that converts a voltage of DC power. As illustrated in FIG. 7, the voltage converter 15 according to the present embodiment is configured to be detachable from the 12 V power supply system PL2 in the circuit branch portion 13, for example, by accommodating a converter body 15A in which the electronic components are mounted on the substrate in a housing 15B and modularizing a configuration in which a connection terminal 15C protrudes from the housing 15B. With this configuration, the voltage converter 15 is detachably assembled to the circuit branch portion 13 by inserting the connection terminal 15C into a portion constituting the 12 V power supply system PL2 in the circuit branch portion 13. Note that, in the 12 V power supply system PL2, the circuit protector 14 described above may be disposed on the upstream side of the voltage converter 15 (48 V battery B2 side) and configured to be integrated with the voltage converter 15, or, alternatively, may be disposed on the downstream side of the voltage converter 15 (second device D2 side) and configured to be integrated with the voltage converter 15. This allows the circuit protector 14 to be provided, in the circuit branch portion 13, detachably from the 12 V power supply system PL2 together with the voltage converter 15.

The electronic component unit 10 configured as described above outputs a part of the power input from the 48 V battery B2 to the circuit branch portion 13 via the battery terminal 11 to each 48 V power supply system PL1 at the first voltage V1 corresponding to the battery voltage without transforming the part of the power, and steps down the remaining part of the power to the second voltage V2 by the voltage converter 15 to output the second voltage V2 to the 12 V power supply system PL2. As a result, the electronic component unit 10 outputs power at a voltage of 48 V corresponding to the first voltage V1 to the first device D1 that is the 48 V drive device, and outputs power at a voltage of 12 V corresponding to the second voltage V2 to the second device D2 that is the 12 V drive device. In this case, the electronic component unit 10 protects each power supply system PL by interposing the circuit protector 14 in each power supply system PL in the circuit branch portion 13.

As illustrated in FIGS. 1, 2, 5, and 6, the power supply wire 20 is a wiring member that is interposed between the electronic component unit 10 and the device D to supply power from the electronic component unit 10 to the device D. That is, the power supply wire 20 constitutes the power supply system PL that supplies power to the device D. The power supply wire 20 is typically configured with a general electric wire, but may be configured with, for example, a planar circuit body such as a flexible printed circuit (FPC) or a flexible flat cable (FFC). The power supply wire 20 of the present embodiment includes a first power supply wire 21 and a second power supply wire 22.

The first power supply wire 21 is the power supply wire 20 constituting the 48 V power supply system PL1 of the power supply system PL. The first power supply wire 21 is provided across the output terminal portion 17 of the electronic component unit 10 and each first device D1, and the 48 V power supply distribution BOX 30 to be described later is provided on the first power supply wire 21. The first power supply wire 21 supplies power output from the electronic component unit 10 at a voltage of 48 V corresponding to the first voltage V1 without passing through the voltage converter 15 to the first device D1 that is the 48 V drive device.

The second power supply wire 22 is the power supply wire 20 constituting the 12 V power supply system PL2 of the power supply system PL. The second power supply wire 22 is provided across the output terminal portion 17 of the electronic component unit 10 and each second device D2, and the 12 V power supply distribution BOX 40 to be described later is provided on the second power supply wire 22. The second power supply wire 22 supplies power output from the electronic component unit 10 via the voltage converter 15 at a voltage of 12 V corresponding to the second voltage V2 to the second device D2 that is the 12 V drive device.

In each of the power supply wires 20 configured as described above, for example, in a transition period in which the first device D1 that is the 48 V drive device and the second device D2 that is the 12 V drive device coexist in the vehicle V, typically, the first power supply wire 21 constituting the 48 V power supply system PL1 having a relatively high voltage tends to be configured to be relatively thin, and the second power supply wire 22 constituting the 12 V power supply system PL2 having a relatively low voltage tends to be configured to be relatively thick. However, the power supply wires 20 are not limited thereto.

As illustrated in FIGS. 1 and 2, the 48 V power supply distribution BOX 30 is interposed between the electronic component unit 10 and the first device D1, and distributes the power supplied from the 48 V battery B2 to the plurality of first devices D1. The 48 V power supply distribution BOX 30 includes electronic components such as a branch portion, a fuse (circuit protector), and a relay, and distributes power to the plurality of first devices D1 in cooperation of these electronic components. The 48 V power supply distribution BOX 30 is provided on the first power supply wire 21 constituting the 48 V power supply system PL1 of the power supply system PL. The 48 V power supply distribution BOX 30 distributes power output at a voltage of 48 V corresponding to the first voltage V1 without being stepped down in the electronic component unit 10 to the plurality of first devices D1 that are the 48 V drive devices. The first power supply wire 21 branches, on the output side of the 48 V power supply distribution BOX 30, into the number corresponding to the number of first devices D1 to which power is distributed from the 48 V power supply distribution BOX 30. In the example of FIG. 2, a total of three 48 V power supply distribution BOXES 30 are illustrated.

As illustrated in FIGS. 1 and 2, the 12 V power supply distribution BOX 40 is interposed between the electronic component unit 10 and the second device D2, and distributes the power supplied from the 48 V battery B2 to the plurality of second devices D2. As with the 48 V power supply distribution BOX 30, the 12 V power supply distribution BOX 40 includes electronic components such as a branch portion, a fuse (circuit protector), and a relay, and distributes power to the plurality of second devices D2 in cooperation of these electronic components. The 12 V power supply distribution BOX 40 is provided on the second power supply wire 22 constituting the 12 V power supply system PL2 of the power supply system PL. The 12 V power supply distribution BOX 40 distributes power stepped down by the voltage converter 15 in the electronic component unit 10 and output at a voltage of 12 V corresponding to the second voltage V2 to the plurality of second devices D2 that are the 12 V drive devices. The second power supply wire 22 branches, on the output side of the 12 V power supply distribution BOX 40, into the number corresponding to the number of second devices D2 to which power is distributed from the 12 V power supply distribution BOX 40. In the example of FIG. 2, a total of one 12 V power supply distribution BOX 40 is illustrated.

The wire harness WH and the electronic component unit 10 described above can output, in the electronic component unit 10, a part of the power input from the 48 V battery B2 to the circuit branch portion 13 via the battery terminal 11 without being transformed to each of the 48 V power supply systems PL1 at the first voltage V1 corresponding to the battery voltage. On the other hand, the wire harness WH and the electronic component unit 10 described above can step down, in the electronic component unit 10, the remaining part of the power input from the 48 V battery B2 to the circuit branch portion 13 via the battery terminal 11 to the second voltage V2 by the voltage converter 15 and output the second voltage V2 to the 12 V power supply system PL2. As a result, the electronic component unit 10 can output power at a voltage of 48 V corresponding to the first voltage V1 to the first device D1 that is the 48 V drive device, and output power at a voltage of 12 V corresponding to the second voltage V2 lower than the first voltage V1 to the second device D2 that is the 12 V drive device. As a result, the wire harness WH and the electronic component unit 10 can appropriately distribute and supply power to the first device D1 and the second device D2 with different drive voltages from each other.

In this case, the wire harness WH is disposed such that the electronic component unit 10 having the voltage conversion function of transforming from the first voltage V1 corresponding to the battery voltage of the 48 V battery B2 to the second voltage V2 and outputting the second voltage V2 is directly provided on the 48 V battery B2. With this arrangement, in the wire harness WH and the electronic component unit 10, for example, in a case where the second devices D2 driven at the second voltage V2 are densely disposed in the vicinity of the 48 V battery B2, the routing length of the second power supply wire 22 whose wire diameter is relatively large and whose weight tends to be large can be shortened as much as possible to enhance the routing efficiency. This prevents the weight of the entire wire harness WH from being increased.

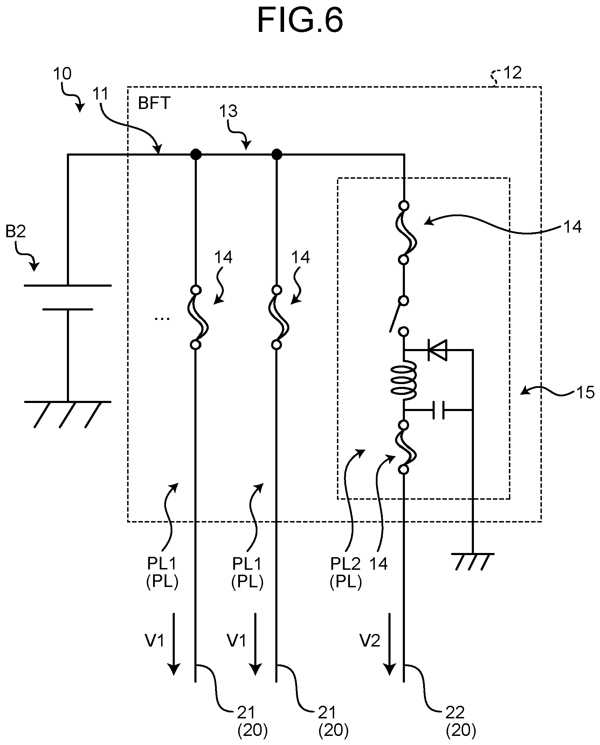

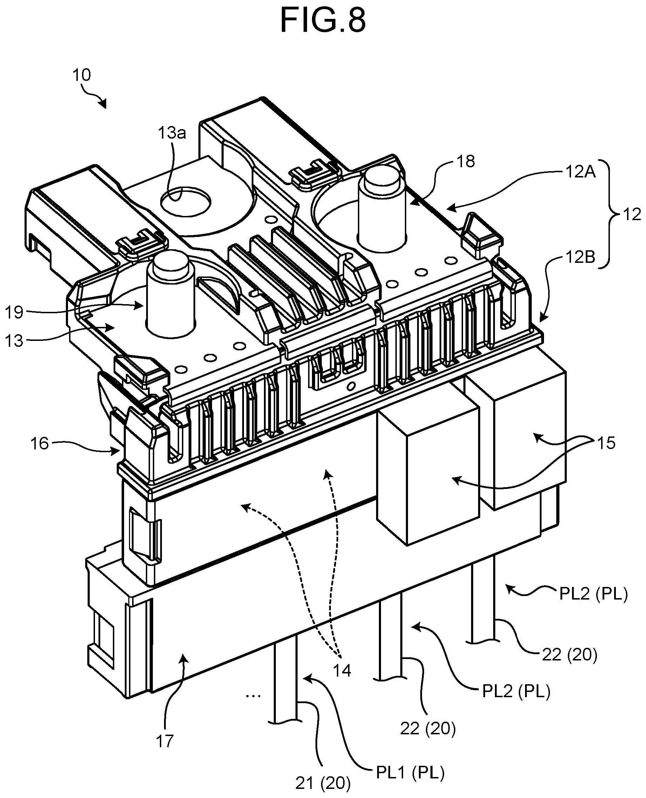

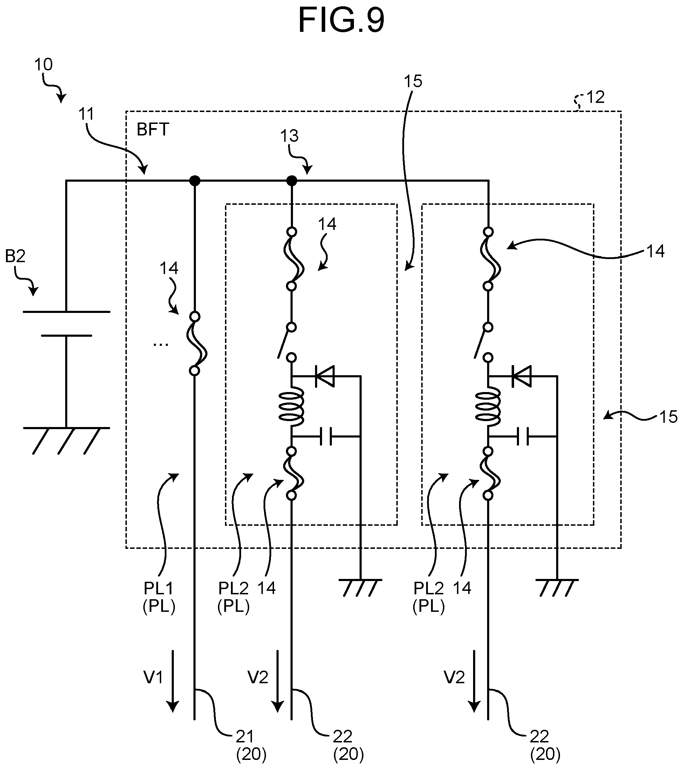

Further, in the wire harness WH and the electronic component unit 10, the voltage converter 15 is configured to be detachable from the power supply system PL in the circuit branch portion 13. With this configuration, in the wire harness WH and the electronic component unit 10, for example, the voltage converter 15 can be appropriately changed and added according to necessary performance in a case where a new device D is additionally mounted during use while the vehicle V tends to be used for a long period of time to achieve carbon neutral or the like. As a result, in the wire harness WH and the electronic component unit 10, for example, the voltage converter 15 is selected according to addition or update of the device D mounted on the vehicle V and assembled to the electronic component unit 10, so that it is possible to easily achieve necessary voltage output and capacity without replacing the entire electronic component unit 10 with another one, and for example, a configuration is possible which is easily adapted to changes in specifications and so on. In the wire harness WH and the electronic component unit 10, as illustrated in FIGS. 8 and 9, the number of outputs of the second voltage V2 lower than the first voltage V1, which is a battery voltage, can be optionally increased according to the situation by providing, in each power supply system PL, a structure that the voltage converter 15 is detachable, for example, in the circuit branch portion 13. The number of outputs of the second voltage V2 is one in the aspects of FIGS. 5 and 6 described above while it is two in the aspects of FIGS. 8 and 9.

As described above, the wire harness WH and the electronic component unit 10 can appropriately supply power to the various devices D mounted on the vehicle V even in a situation where the devices D with different drive voltages coexist.

Further, in the wire harness WH and the electronic component unit 10 described above, the circuit protector 14 is interposed in each power supply system PL in the circuit branch portion 13 of the electronic component unit 10. Thus, when overcurrent flows through the power supply system PL, the circuit protector 14 cuts off the overcurrent, so that the power supply system PL can be protected. In this case, in the wire harness WH and the electronic component unit 10, as with the voltage converter 15, the circuit protector 14 is also configured to be detachable from the power supply system PL in the circuit branch portion 13, and thus, a configuration is possible which is easily adapted to changes in specifications and so on also in this respect.

Note that the electronic component unit and the wire harness according to the embodiment of the present invention described above are not limited to the embodiment described above, and various modifications can be made thereto within the scope described in the claims.

In the above description, the electronic component unit 10 has the circuit protection function together with the circuit branch function and the voltage conversion function, but the present invention is not limited thereto. Specifically, it is possible that the electronic component unit 10 does not include the circuit protector 14 and, for example, the circuit protector may be provided in another part on each power supply system PL.

In the above description, the circuit branch portion 13 branches the power supplied from the 48 V battery B2 into the plurality of 48 V power supply systems PL1 and one 12 V power supply system PL2, but the present invention is not limited thereto. As described above, two or more 12 V power supply systems PL2 may be provided. In this case, in the electronic component unit 10, the voltage converter 15 is provided in each 12 V power supply system PL2 in the circuit branch portion 13.

In the above description, the power supply terminal 11 and the unit body 12 are configured separately, but the present invention is not limited thereto. The power supply terminal 11 and the unit body 12 may be integrally configured, and for example, the power supply terminal 11 and the circuit branch portion 13 may be integrally connected.

The electronic component unit and the wire harness according to the present embodiment may be configured by appropriately combining the constituent elements of the embodiment and the modifications described above.

As described above, in the wire harness WH and the electronic component unit 10, the voltage converter 15 can be appropriately changed and added according to necessary performance, for example, in a case where a new device D is additionally mounted while the wire harness WH and the electronic component unit 10 are used. In this regard, as a reference example, the wire harness and the electronic component unit may have a configuration in which the voltage converter is removed, for example, in a case where the voltage converter 15 becomes unnecessary afterwards.

The electronic component unit and the wire harness according to the present embodiment exhibit advantageous effects of appropriately supplying power to various devices mounted on a vehicle.

## Claims

1. An electronic component unit (10) comprising:
a power supply terminal (11) that is connectable to a power supply (B2) mounted on a vehicle (V) and capable of supplying power at a first voltage (V1);
a circuit branch portion (13) that is connected to the power supply terminal (11) to branch power supplied from the power supply (B2) into a plurality of power supply systems (PL, PL1, PL2); and
a voltage converter (15) that is provided in at least one (PL2) of the plurality of power supply systems (PL, PL1, PL2) in the circuit branch portion (13), and converts a voltage of the power supplied from the power supply (B2) into a second voltage (V2) lower than the first voltage (V1) to output the second voltage (V2) , said electronic component unit (10) being **characterized in that** the voltage converter (15) is detachably assembled to the circuit branch portion (13).

2. The electronic component unit (10) according to claim 1, further comprising:
a circuit protector (14) that is detachably provided from the power supply systems (PL, PL1, PL2) in the circuit branch portion (13) and protects, in response to overcurrent flowing through the power supply systems (PL, PL1, PL2), the power supply systems (PL, PL1, PL2) by cutting off the overcurrent.

3. A wire harness (WH) comprising:
the electronic component unit (10) according to claim 1; and
a power supply wire (20, 21, 22) for supplying power from the electronic component unit (10) to devices (D, D1, D2) mounted on the vehicle (V),

## Patentansprüche

1. Eine elektronische Bauteil-Einheit (10), aufweisend:
einen Stromversorgungsanschluss (11), der mit einer Stromversorgung (B2) verbindbar ist, die an einem Fahrzeug (V) angebracht ist und Strom mit einer ersten Spannung (V1) liefern kann;
einen Schaltungsabzweigabschnitt (13), der mit dem Stromversorgungsanschluss (11) verbunden ist, um von der Stromversorgung (B2) gelieferte Stromversorgung in eine Vielzahl von Stromversorgungssystemen (PL, PL1, PL2) abzuzweigen; und
einen Spannungswandler (15), der in mindestens einem (PL2) der Vielzahl von Stromversorgungssystemen (PL, PL1, PL2) vorgesehen ist, um eine von der Stromversorgung (B2) gelieferte Spannung in dem Schaltungsabzweigabschnitt (13) in eine zweite Spannung (V2) umzuwandeln, die niedriger ist als die erste Spannung (V1), um die zweite Spannung (V2) auszugeben. PL2) in dem Schaltungsabzweigabschnitt (13) vorgesehen ist und eine Spannung der von der Stromversorgung (B2) gelieferten Stromversorgung in eine zweite Spannung (V2) umwandelt, die niedriger als die erste Spannung (V1) ist, um die zweite Spannung (V2) auszugeben, wobei die elektronische Bauteil-Einheit (10) **dadurch gekennzeichnet ist, dass** der Spannungswandler (15) abnehmbar an dem Schaltungs-Abzweigabschnitt (13) zusammengebaut ist.

2. Die elektronische Bauteil-Einheit (10) nach Anspruch 1, ferner aufweisend:
einen Schaltungsschutz (14), der abnehmbar von den Stromversorgungssystemen (PL, PL1, PL2) in dem Schaltungsabzweigabschnitt (13) vorgesehen ist und in Reaktion auf einen durch die Stromversorgungssysteme (PL, PL1, PL2) fließenden Überstrom die Stromversorgungssysteme (PL, PL1, PL2) durch Abschneiden des Überstroms schützt.

3. Ein Kabelbaum (WH) aufweisend:
die elektronische Bauteil-Einheit (10) nach Anspruch 1 und eine Stromversorgungsleitung (20, 21, 22) zum Zuführen von Strom von der elektronischen Bauteil-Einheit (10) zu Vorrichtungen (D, D1, D2), die an dem Fahrzeug (V) angebracht sind.

## Revendications

1. Unité de composant électronique (10) comprenant :
une borne d'alimentation électrique (11) qui peut être connectée à une alimentation électrique (B2) montée sur un véhicule (V) et capable de fournir de la puissance à une première tension (V1) ;
une portion de dérivation de circuit (13) qui est connectée à la borne d'alimentation électrique (11) pour dériver la puissance fournie par l'alimentation électrique (B2) vers une pluralité de systèmes d'alimentation électrique (PL, PL1, PL2) ; et
un convertisseur de tension (15) qui est prévu dans au moins un système (PL2) de la pluralité de systèmes d'alimentation électrique (PL, PL1, PL2) dans la portion de dérivation de circuit (13), et convertit la tension de la puissance fournie par l''alimentation électrique (B2) en une seconde tension (V2) inférieure à la première tension (V1), pour délivrer en sortie la seconde tension (V2), ladite unité de composant électronique (10) étant **caractérisée en ce que** le convertisseur de tension (15) est assemblé de manière amovible à la portion de dérivation de circuit (13).

2. Unité de composant électronique (10) selon la revendication 1, comprenant en outre :
un dispositif de protection de circuit (14) qui est prévu de manière amovible sur les systèmes d'alimentation électrique (PL, PL1, PL2) dans la portion de dérivation de circuit (13), et protège les systèmes d'alimentation électrique (PL, PL1, PL2) en réponse à une surintensité circulant dans les systèmes d'alimentation électrique (PL, PL1, PL2) en interrompant la surintensité.

3. Faisceau de câbles (WH) comprenant :
l'unité de composant électronique (10) selon la revendication 1 ; et
un câble d'alimentation électrique (20, 21, 22) pour fournir de la puissance à partir de l'unité de composant électronique (10) à des dispositifs (D, D1, D2) montés sur le véhicule (V).
